# EUROPEAN PATENT SPECIFICATION

(11) **EP 4 247 655 B1**
(45) Date of publication and mention of the grant of the patent: **07.01.2026**
(21) Application number: 21830490.5
(22) Date of filing: 18.11.2021
(51) Int. Cl.: B60J 5/06

(54) **TARPAULIN AND TENSIONING STRAP**
PLANE UND SPANNGURT
BÂCHE ET SANGLE DE TENSION

(30) Priority: 19.11.2020 BE 202005837
(43) Date of publication of application: 27.09.2023
(73) Proprietor: Versus-Omega BV, 3660 Oudsbergen (BE)
(72) Inventor: ROGIERS, Erik Ronny Felix, 3850 Kozen (BE); PEETERS, Pascal, 3990 Peer (BE)
(74) Representative: Philippaerts, Yannick
(86) International application number: PCT/IB2021/060705
(87) International publication number: WO 2022/107041

(56) References cited:
- EP-A1- 2 708 393
- EP-A1- 3 471 983
- AU-A1- 2010 206 060
- FR-A1- 2 414 434
- JP-U- S5 848 582

## Description

The invention relates to a system for closing a side wall of a loading space. Such suspension systems typically comprise a support beam provided with rails in which carriages with wheels can roll. The tarpaulin is attached to these carriages. The tarpaulin is tensioned in the closed position between two upright stop beams.

Loading spaces enclosed by load containers, in particular mobile load containers situated on trucks and/or trains, must comply with predetermined maximum outer dimensions. These outer dimensions are often imposed by law. These prescribed maximum dimensions limit the loading space, this being the space effectively available inside the load container. Sides of such loading spaces are often closed off with a tarpaulin which can be slid open in order to thus provide access to the loading space via the relevant side. In order to obtain maximum loading space the tarpaulin is attached to an outermost peripheral edge of the load container.

The tarpaulin is typically suspended from carriages which can roll over tracks in rails present in a support beam. The carriages bear the tarpaulin and are themselves supported by the support beam. The carriages allow sliding open of the tarpaulin by rolling the carriages over the rails to one end of the support beam in the longitudinal direction of the support beam. The tarpaulin is typically rectangular and in a suspended position has an upper edge, a lower edge and two upright side edges. At the upper edge the tarpaulin is attached to the carriers which roll in the support beam so that the tarpaulin is suspended. At the lower edge the tarpaulin can likewise be attached to carriages which roll in a further support beam at the position of the lower edge in order to thus guide the tarpaulin on the underside. The tarpaulin can alternatively be provided on its lower edge with closing elements such as buckles with which the tarpaulin can be closed at the position of the lower edge. Lateral supports are preferably provided on the tarpaulin at the upright side edges, which supports can likewise be guided via the guide beam of the loading space. A tensioning mechanism is provided on at least one of the lateral supports so that the tarpaulin can be tensioned between the two supports. Examples of such systems are known e.g. from JP S58 48582 U, FR 2 414 434 A1, AU 2010 206 060 A1 or EP17754597.

Cargo securing has become increasingly important in recent years. Cargo securing is a term that defines the manner in which goods are held in a loading space. Correct application of cargo securing rules minimizes the chance of loss of load during a manoeuvre. In the past, securing of cargo would necessitate goods on a trailer closed with a tarpaulin being secured to the chassis or the bottom plate of the trailer. This allowed goods to be held in place when performing a manoeuvre. Recent rules regarding cargo securing sallow goods to be placed loose in the trailer when the tarpaulin and the suspension system of the tarpaulin meet predetermined strength standards. Securing of loads to a chassis or bottom plate is labour-intensive, which has caused great interest in recent years in suspension systems which meet these predetermined strength standards. In order to meet the predetermined strength standards the tarpaulin is tensioned in the longitudinal direction of the loading space.

EP17754597 describes a system for attaching a tarpaulin for the purpose of closing a side of a loading space, wherein the system comprises an upper support beam and a lower support beam, which system further comprises a plurality of upright reinforcements which each comprise an upper carriage compatible with the upper support beam and a lower the guide element compatible with the lower support beam such that the upright reinforcements are connected via the carriages and guide elements to the support beams and are movable in the longitudinal direction relative to the support beams, which plurality of upright reinforcements are provided for the purpose of connecting to the tarpaulin so that the tarpaulin can be opened and closed by moving the upright supporting beams and so that the tarpaulin extends on an outer side of the upright reinforcements, wherein the system comprises a door element which is provided for the purpose of attaching the tarpaulin thereto, which door element comprises on an upper side and on a lower side guide means which are complementary to respectively the upper and lower support beam, and which door element is complementary to the first stop beam so that the side wall is closable by pressing the door element against the first stop beam. In EP17754597 folding plates are further provided between adjacent upright reinforcements in order to assist the folding outward of the tarpaulin during closing. An advantage of this system is the great convenience of use and the high strength. A problem may arise when cargo shifts or moves and thereby ends up between adjacent upright reinforcements, and so impedes sliding open of the system. In order to prevent cargo from ending up between adjacent upright reinforcements the distance between the upright reinforcements is chosen on the basis of the intended use of the loading space. When pallets are primarily being transported, the distance is chosen such that a pallet does not fit between the reinforcements. When beverage carriers are primarily being transported, the distance is chosen such that a beverage carrier does not fit between the reinforcements. A drawback hereof is that, by placing more upright reinforcements, the system becomes not only more expensive but also heavier, and can be slid open less far.

The present invention has for its object to obviate at least one of the above stated drawbacks.

For this purpose the invention provides a system for attaching a tarpaulin for the purpose of closing a side of a loading space, wherein the system comprises an upper support beam, a lower support beam and a first and a second upright stop beam, which system further comprises a plurality of upright reinforcements, each comprising an upper carriage compatible with the upper support beam and a lower guide element compatible with the lower support beam, such that the upright reinforcements are connected via the carriages and guide elements to the support beams and are movable in the longitudinal direction relative to the support beams, which plurality of upright reinforcements are provided for the purpose of connecting to the tarpaulin so that the tarpaulin can be opened and closed by moving the upright supporting beams and so that the tarpaulin extends on an outer side of the upright reinforcements, wherein the system comprises a door element which is provided for the purpose of attaching the tarpaulin thereto, which door element comprises on an upper side and on a lower side guide means which are complementary to respectively the upper and lower support beam, and which door element is complementary to the first stop beam so that the side wall is closable by pressing the door element against the first stop beam, characterized in that a tensioning strap is connected between the door element and the second stop beam so that, when the door element is pressed against the first stop beam, the tensioning strap is tensioned on an inner side of the upright reinforcements.

The tensioning strap is tensioned when the door element is pressed against the first stop beam. In this position of the door element the tarpaulin is closed. The tensioning strap will hereby be tensioned in the closed position of the tarpaulin. The tensioning strap is tensioned on an inner side of the upright reinforcements. The tensioning strap hereby forms a stop for goods in the loading space. More specifically, the tensioning strap prevents goods from shifting or moving to a position between the upright reinforcements in that it is tensioned between the second stop beam and the door on the inner side of the upright reinforcements. Goods will be restrained at least largely by the tensioning strap. This obviates the need to adjust the distance between the upright reinforcements to the goods which will primarily be transported. This then allows the upright reinforcements to be placed further apart, making the system lighter, cheaper and more compact. The strength is preserved in that the tensioning strap adds additional strength to the whole. Application of the tensioning strap in the system for attaching a tarpaulin even provides a surprising advantage, more specifically, it increases the strength so that a system with fewer upright reinforcements will still meet the legal strength standards. This allows the system to be manufactured more cheaply.

The tensioning strap is preferably freely movable relative to each of the upright reinforcements in at least one direction of movement, preferably at least two directions of movement, more preferably at least three directions of movement. The at least one direction of movement runs in the longitudinal direction of the tensioning strap. The tarpaulin is connected to the upright reinforcements and, when the tarpaulin becomes tensioned, determines the exact intermediate distance between the different upright reinforcements. By making the tensioning strap movable relative to the upright reinforcements in at least its longitudinal direction the tensioning force on the tensioning strap will not be influenced to noticeable extent by the relative position of the upright reinforcements. This also separates the tensioning force on the tensioning strap from the tension and distribution thereof in the tarpaulin. A slot having almost exactly the width of the tensioning strap could be provided on an upright reinforcement so that the tensioning strap is freely movable in one direction of movement by sliding in the slot. When a slot is considerably wider than the width of the tensioning strap, the tensioning strap can also move in an upward/downward direction and therefore move freely in two directions of movement. Most preferably, the tensioning strap is not connected to the upright reinforcements at all. This latter is simplest in technical terms because it requires no modification of or provision on the upright reinforcement. It also allows the tensioning strap to be retrofitted on an existing system for attaching a tarpaulin for the purpose of closing a side of a loading space.

According to the invention, the tensioning strap is connected to the tarpaulin at multiple positions, wherein each connection is realized via a tarpaulin connector which is positioned substantially centrally between adjacent upright reinforcements, which tarpaulin connector is provided to bridge at least a distance between the outer side and the inner side of the upright reinforcements. By connecting the tensioning strap to the tarpaulin via a tarpaulin connector the tensioning strap is pulled along outward by the tarpaulin during opening of the tarpaulin. This is because the tarpaulin will typically fold outward in the manner of a concertina, wherein each tarpaulin part situated between adjacent upright reinforcements is substantially folded double with its central zone furthest outward. By connecting the tensioning strap to this central zone via the tarpaulin connector the tensioning strap is also pulled furthest outward. Hereby, the tensioning strap does not drop down in uncontrolled manner when the tarpaulin is opened and the tension is relieved. This prevents the tensioning strap from coming to hang loose when the tarpaulin is opened and thereby forming an impediment to the proper operation of the system or to displacing of cargo.

The number of said plurality of positions is preferably substantially equal to and preferably one whole number greater than the number of upright reinforcements. In other words, the tensioning strap is preferably connected to the tarpaulin between all upright reinforcements and between the first and the last upright reinforcement and the stop beam and/or door. The tensioning strap hereby follows the tarpaulin over the whole length of the system when the tarpaulin takes on a concertina form during opening. This means that no segment of the tensioning strap comes to hang in uncontrolled or loose manner when the tarpaulin is opened.

Each tarpaulin connector preferably allows a predetermined limited movement in at least two directions of movement, preferably at least three directions of movement. The tarpaulin connector is more preferably formed by a flexible element with a predetermined length. A flexible element is for instance a rope or a strap piece or a loop. Such elements allow a limited movement, usually determined by the length of the flexible element. The limited movement allows the tensioning strap and the tarpaulin to be tensioned independently of each other, wherein one has little or no direct influence on the other. At the same time, the limited movement will still ensure that when the tarpaulin folds into a concertina form, the tensioning strap is pulled along. The limited movement is smaller than 20 cm, preferably smaller than 15 cm, most preferably about 10 cm.

The tarpaulin connector is preferably releasable. The tarpaulin connector can thus be connected to the tarpaulin and/or to the tensioning strap via a loop with velcro tape or other releasable means.

The tensioning strap is preferably connected to the door element via a control mechanism in order to control the tensioning force of the tensioning strap in the closed position. The control mechanism can take different forms. A simple form is a ratchet for a strap. Ratchets are known, reliable and provide a mechanism for tensioning a strap. A shaft can alternatively be provided onto which the tensioning strap can be wound. The tensioning strap is tensioned to greater or lesser extent by rotating the shaft. The system operates optimally when the tensioning strap is tightly tensioned when the tarpaulin is closed. Providing a control mechanism enables this optimal tension to be set.

The tensioning strap is preferably connected to an inner side of the door element. This makes it easy to tension the tensioning strap on the inner side of the upright reinforcements.

The tensioning strap preferably comprises a hook which is complementary to the second stop beam for the purpose of connecting the tensioning strap to the second stop beam via the hook. Alternatively, the system comprises a second door element which is provided for the purpose of attaching the tarpaulin thereto, which second door element comprises on an upper side and on a lower side guide means which are complementary to respectively the upper and lower support beam, and which second door element is complementary to the second stop beam so that the side wall is closable by pressing the second door element against the second stop beam, wherein the tensioning strap can be connected at the position of the second stop beam to the second stop beam via the second door element.

The door element preferably comprises a lock mechanism which is complimentary to the stop beam for the purpose of locking the door element in the closed position. The stop beam preferably has a groove and the lock mechanism preferably comprises a closing profile which extends along at least one quarter of the height of the door element, which closing profile is connected rotatably to the door element at at least two positions, wherein the closing profile is further provided with a tongue which is provided to engage in the groove by rotation of the closing profile and so press the door element against the stop beam.

The lock mechanism preferably further comprises tightening means for tightening the door element against the stop beam. Tightening the door element against the stop beam simultaneously tensions the tensioning strap along the inner side of the upright reinforcements and tensions the tarpaulin along the outer side of the upright reinforcements.

The lower guide element preferably comprises a lower carriage. The upright reinforcements are preferably formed by upright supporting beams. The upper support beam is preferably provided with an upper rail which extends in a longitudinal direction, wherein the upper carriages of the upright reinforcements are provided so as to be guided in the longitudinal direction by the upper rail, and wherein the lower support beam is provided with a lower rail which extends in longitudinal direction, wherein the lower guide elements of the upright reinforcements are provided so as to be guided in the longitudinal direction by the lower rail.

The system preferably further comprises folding plates, each comprising a substantially central pivot zone and two peripheral pivot zones, wherein the folding plates mutually connect adjacent upright reinforcements in a manner such that the folding plates press the tarpaulin outward when the upright reinforcements are moved toward each other. Folding plates assist the folding of the tarpaulin in the manner of a concertina.

The invention further relates to a trailer for a truck, at least one side wall of which is provided with a system according to the invention. The invention further relates to a wagon for a train, at least one side wall of which is provided with a system according to the invention.

The invention will now be further described on the basis of exemplary embodiments shown in the drawings.

In the drawings:
figure 1 shows a trailer for a truck, a side wall of which is provided with a system according to an embodiment of the invention;
figure 2 shows a side view of a system according to an embodiment of the invention at the position of the door;
figure 3 shows a horizontal section of a system according to an embodiment of the invention;
figure 4 shows a horizontal section of a door which can be applied in a system according to an embodiment of the invention;
figure 5 shows a further state of the door of figure 4;
figure 6 shows a preferred embodiment of a tarpaulin connector which can be applied in a system according to an embodiment of the invention.

The same or similar elements are designated in the drawings with the same reference numerals.

A folding plate is defined in the context of this description as an elongate plate with a plurality of fold and/or pivot zones so that the plate, as seen in its entirety, is deformable by being folded and/or pivoted between a first straightened position and a second folded position. The word 'folding' in folding plate is not intended to limit the scope of the word but refers only to a preferred embodiment of the invention. Pivot zone is defined as a zone which allows rotation of two stiffer parts relative to each other. A pivot zone can be formed in different ways, for instance by connecting two parts via a shaft. The preferred embodiment in the invention is a fold zone, wherein a plate part, which is then referred to as the fold zone, allows rotation of two stiffer parts relative to each other through deformation. The advantage of applying a fold zone as pivot zone is that this allows the folding plate to be manufactured as single piece.

In the context of this description a tensioning strap is defined as a ribbon-like structure which preferably forms a flat elongate auxiliary means. A tensioning strap is usually made by weaving, in exceptional cases also by knitting. Materials of the threads, thickness of the threads, numbers of threads, thickness of the ribbon itself, number of layers of fabric, ... can all differ. Reinforcing threads of for instance steel, glass fibre, kevlar or other material are preferably incorporated. A tensioning strap is typically used to secure load during transport of goods. The tensioning strap according to the invention is preferably made such that the stretch is minimal when loaded. This can be done by using rigid fibres, by weaving tightly, by using thicker fabrics. This can also be realized by working said reinforcing threads into the tensioning strap. The tensioning strap according to the invention preferably particularly has a stretch of less than 3% under 1 ton of load, more preferably less than 2%, most preferably less than 1%.

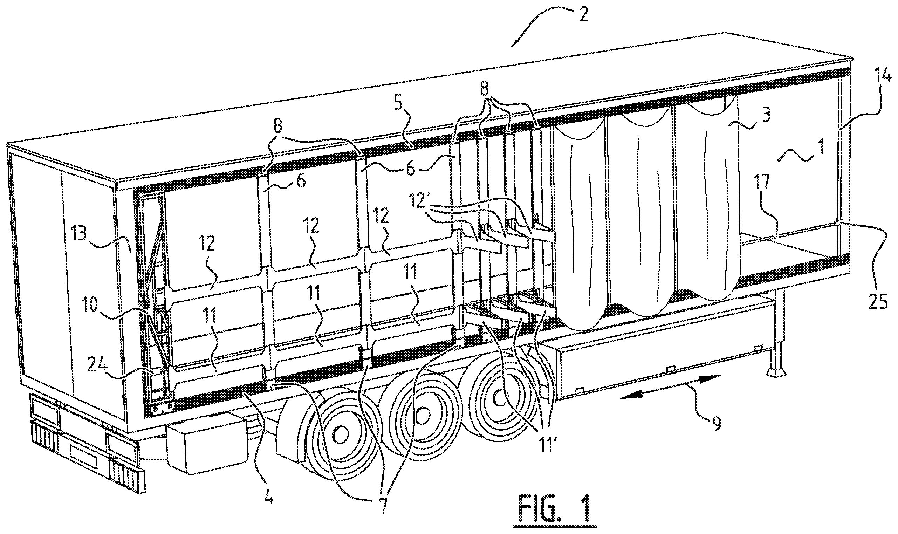

The invention relates to a system for suspending a tarpaulin for the purpose of closing a side of a loading space. Loading space 1 is preferably defined here by a load container 2, in particular a mobile load container. The mobile load container is shown in figure 1 as a trailer of a truck. Such mobile load containers 2 are typically used to transport goods. It will be apparent that the invention is not only applicable to trailers of trucks, but also to railway wagons, trucks with fixedly constructed load container and further mobile load containers with loading spaces for transporting goods.

Such load containers typically have dimensions which are limited by law. In Belgium for instance an outer dimension with a maximum width of 2.55 m is thus imposed for a non-refrigerated load container of a truck. These imposed maximum outer dimensions affect the maximum loading space in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside the wall. The outer dimensions are in this way defined substantially by the wall of the loading space, this maximizing the room available in the loading space.

The wall is preferably formed by a tarpaulin 3. A tarpaulin 3 typically has a small thickness and will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated in figure 1, wherein tarpaulin 3 has been pushed partially to a left-hand side of the trailer.

Figure 1 shows a trailer wherein tarpaulin 3 is suspended via a suspension system with carriages and support beams, wherein the support beams are located on the underside as well as on the upper side. Figure 1 shows on the left-hand side of the trailer the suspension system without tarpaulin, first with straightened folding plates, then with folded folding plates, and in addition the figure shows a part of the suspension system with tarpaulin 3. In figure 1 the upper support beam is designated with reference numeral 5 and the lower support beam is designated with reference numeral 4.

Upright supporting beams 6 extend between the lower and upper support beams 4, 5. In the embodiment of figure 1 the upright supporting beams 6 formed the upright reinforcements. Instead of a beam, it is also possible to opt for a stiff slat, for instance a narrow piece of metal plate, which is connected to the tarpaulin in order to form an upright attachment.

On the upper side the upright supporting beams 6 comprise upper carriages 8 which are compatible with the upper support beam. The tarpaulin is then connected to upright supporting beams 6 such that the side wall of the loading space can be closed off with the tarpaulin.

The upright supporting beams 6 comprise on their underside respective lower carriages 7 which are compatible with lower support beam 4. The lower carriages form a preferred embodiment of lower guide elements which are provided to move in the longitudinal direction in lower support beam 4. In a simplest form the lower support beam has a downward slot and the lower guide element is formed as a downward pin which fits into the slot and can move therein in the longitudinal direction. The primary function of the lower guide element is to prevent the lower part of the upright reinforcement from being able to be pushed away from lower support beam 4. Secondly, the lower guide element also functions to facilitate movement in the longitudinal direction, for which purpose it can be provided with a carriage with wheels.

Lower support beam 4 is provided with rails and lower carriages 7 are provided with wheels which are compatible with these rails such that lower carriages 7 can travel in the rails in a longitudinal direction 9 of support beam 4. Upper support beam 5 likewise comprises rails and upper carriages 8 comprise wheels which are compatible with these rails such that upper carriages 8 can also travel in the rails in a longitudinal direction 9 of upper support beam 5. Because upright supporting beams 6 extend between lower carriages 7 and upper carriages 8, upright supporting beams 6 can move in the longitudinal direction 9, this usually being substantially perpendicularly of the longitudinal direction of supporting beams 6. By moving upright supporting beams 6 in the direction of one end of the side wall of loading space 1 the tarpaulin 3 can be slid open in order to provide access to loading space 1. As the skilled person will appreciate, tarpaulin 3 can also be closed in the same manner.

Further elements, such as a door 10, can extend between upper support beam 5 and lower support beam 4. In the context of the system for attaching a tarpaulin 3 for closing the side of a loading space 1 a door 10 is defined as an upright supporting beam 6 which, in addition to holding the tarpaulin, has an additional functionality. Door 10 of figure 1 has the further function of attaching the tarpaulin on a side to an upright edge of loading space 1. Such a door is described in BE 2012/0619 which is incorporated herein for the description of door 10. A similar door 10 can be provided in the middle of the side wall in order to impart extra sturdiness to the system.

Folding plates 11, 12 are preferably mounted between adjacent upright supporting beams 6. Preferably one, and more preferably two folding plates are mounted between each of the adjacent upright supporting beams 6. A first folding plate 11 is preferably mounted here in a lower zone of upright supporting beam 6, while a second folding plate 12 is preferably provided in an upper half of the upright supporting beam, more preferably between a half and three quarters of the height of upright supporting beam 6. This embodiment shows a preferred embodiment. The invention can be applied without providing folding plates.

In figure 1 the folding plates in the lower zone are designated with reference numeral 11 and the folding plates in the upper zone are designated with reference numeral 12, wherein the folding plates which are in the straightened state are indicated without further designation and wherein the folding plates which are in the folded state comprise an accent after the reference numeral. A folding plate 11, 12 is shown consistently in the figure between each of the adjacent upright supporting beams 6. Systems can however also be constructed in practice wherein folding plates intentionally do not extend between predetermined upright supporting beams. A door 10 could for instance be positioned for functional reasons close to a first upright supporting beam 6, wherein door 10 is connected only via tarpaulin 3 to the first upright supporting beam 6. A folding plate would then not extend between door 10 and first upright supporting beam 6, and wherein the first upright supporting beam 6 will then be connected via folding plates to a further supporting beam 6. The invention is therefore not limited to a system in which all upright supporting beams 6 are connected to each other by means of folding plates. According to a preferred embodiment of the invention, the majority of adjacent upright supporting beams 6 are connected to each other by means of folding plates 11, 12. The manner of connecting the folding plate is described at length in EP17754597, incorporated herein for the description of the folding plate and its connection to supporting beams 6.

Figure 1 shows that the tensioning strap is connected to the system. The system for attaching a tarpaulin has a thickness which is determined substantially by the thickness of the upright reinforcements 6 and the door 10. The tarpaulin extends on or along the outer side of the system. This means that the upright reinforcements and the door will be situated at least largely on the inner side relative to the tarpaulin. The tarpaulin thereby forms the outer visible layer of the system. The tensioning strap extends on or along the inner side of the system. This means that the upright reinforcements and the door are situated at least largely on the outer side relative to the tensioning strap. The tensioning strap thereby forms a layer on the inner side of the system, which forms a barrier to goods owing to the tension of the strap.

The tensioning strap is connected on one side to door 10, preferably via a control mechanism 24. In the closed position of door 10 the tensioning strap is connected via door 10 and control mechanism 24 to the first upright stop beam 13. The tensioning strap is connected on the other side to the second upright stop beam 14. This can be done with a fixed connection, for instance via a screw or bolt, or with a releasable connection, for instance via a hook. The length of the tensioning strap is chosen and adjusted and/or controlled such that when door 10 is in the closed position, the tensioning strap is tensioned between the first and the second stop beam 13, 14. The height at which the tensioning strap is provided can be adjusted on the basis of the intended function. More specifically, the height can be chosen taking into consideration the goods which will primarily be transported with the loading space. It is further possible to place two or more tensioning straps one above the other, wherein the height of each strap can be chosen individually. This makes it possible to provide a lower tensioning strap which will mainly prevent sliding of goods and an upper tensioning strap which will prevent toppling and/or deformation of goods.

Tarpaulin 3 is suspended such that it can slide open in order to provide access to the loading space via the side wall. Several configurations are possible for this purpose. Tarpaulin 3 can be placed such that it can only slide open on one of its sides. The tarpaulin as shown in figure 1 can thus be attached fixedly to the upright stop beam 14 so it can only slide open on the side of upright stop beam 13.

Door 10 comprises a closing side which takes a complementary form to a stop beam 13 of the loading space, such that the door can lie with its closing side against the upright stop beam 13 of the loading space in order to close the loading space. For this purpose the door comprises a lock mechanism. The door preferably further comprises a rubber which extends from bottom to top on the closing side of door 10, such that the door forms a watertight closure for the loading space when it lies against the upright stop beam 13. The rubber is alternatively mounted against the upright stop beam.

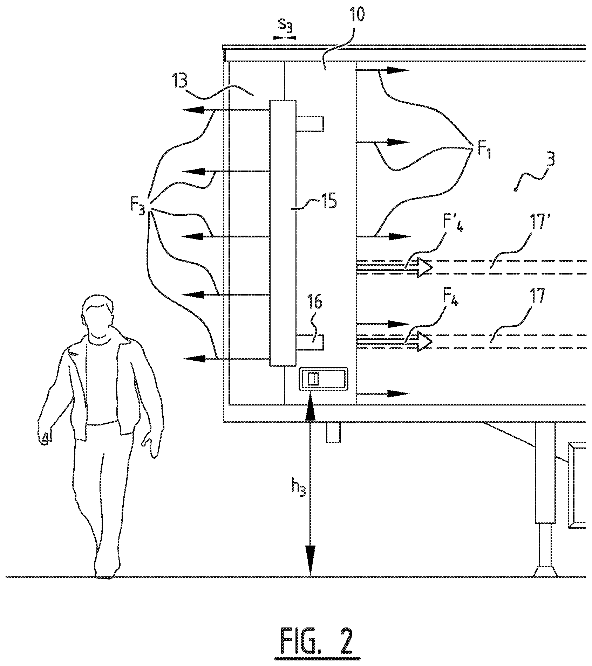

Figure 2 shows the effect of the tensioning force of the tarpaulin on the door when the door is closed against the stop beam. In this closed position of door 10 against stop beam 13 the tarpaulin which closes loading space 1 is maximally tensioned. Due to the tension in tarpaulin 3, tarpaulin 3 pulls on door 10 with a force which is illustrated in the figures with arrows F1. This force is distributed substantially uniformly over the height of door 10. Figure 2 further illustrates the force F4 resulting from tensioning strap 17. More specifically, figure 2 shows an embodiment with two tensioning straps 17 and 17'. Each of the tensioning straps engages on door 10 at a determined height, and pulls on the door with a force F4. In contrast to the force F1 on tarpaulin 3, which is distributed over the height, force F4 forms or, when two tensioning straps 17 and 17' are provided, forces F4 and F4' form point forces.

Figure 2 shows a suspension system for a tarpaulin, wherein the tarpaulin is closed as according to a preferred embodiment of the invention. This figure shows the order and the effects of the closing. The figure shows that door 10 is connected to stop beam 13 via a closing element 15 which extends over a considerable height of door 10. The figure shows the tensile force exerted by the tarpaulin on door 10 with the arrows F1 and it shows the force exerted by tensioning strap 17 on door 10 with arrows F4. The figure further shows the closing force which engages via the closing element on door 8 with arrows F3.

This figure illustrates that the closing force F3 is distributed over at least a part of the door, whereby no point force engages on the door. The closing element is here operated by a handle 16 which is placed at a height H3, in a lower zone of door 10. This handle can be easily accessed and operated by a user. The figure further shows that the tensile force F1 of the tarpaulin is hardly able to pull door 10 away from stop beam 13 because this tensile force F1 is counteracted by a closing force F3 over a great height. Hereby, no or hardly any gap S3 is left between door 10 and stop beam 13. The closing element preferably extends between a lower height Hmin and an upper height Hmax, and the tensioning strap is connected to door 10 at a height lying between Hmin and Hmax.

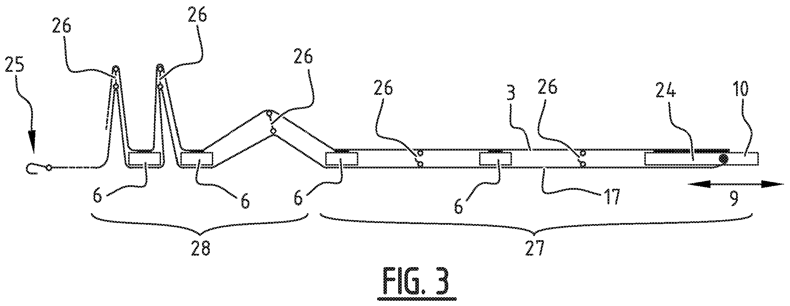

Figure 3 illustrates a preferred embodiment of the way in which a tensioning strap 17 can be integrated into a system for attaching a tarpaulin 3. The figure shows a section at the position of tensioning strap 17. A skilled person will appreciate that when a tensioning strap 17 is provided between a door 10 and a second stop beam 14, and is not provided with any further connection to the system, the tensioning strap will come to hang in completely loose and uncontrolled manner when door 10 is opened. Tarpaulin connectors 26 are provided in order to avoid this. A tarpaulin connector forms a physical link or connection between the tarpaulin and the tensioning strap. A tarpaulin connector can be embodied in different ways, as will be further elucidated below.

On the right-hand side of figure 3 the tarpaulin and the tensioning strap are shown in the extended state 27, which the tarpaulin and the tensioning strap are also in when the tarpaulin is tensioned. On the left-hand side of figure 3 the tarpaulin and the tensioning strap are shown in the folded state 28, which the tarpaulin and the tensioning strap are in when the tarpaulin is opened. Tarpaulin 3 is preferably fixedly connected, optionally releasably connected to the door 10 and to the upright reinforcements 6. At the position of the second upright stop beam the tarpaulin is also connected fixedly or releasably to the stop beam (not shown in figure 3). The tensioning strap is preferably not connected to the upright reinforcements 6, in other words is separate from the upright reinforcements or can move in three different directions of movement relative to upright reinforcements 6. Embodiments can be envisaged wherein the tensioning strap is connected to the upright reinforcements 6, wherein at least a movement in the longitudinal direction 9 between the tensioning strap and the upright reinforcements 6 is preferably allowed.

A tarpaulin connector 26 is connected to the tarpaulin between adjacent upright reinforcements 6, optionally also between door 10 and the upright reinforcement 6 adjacent thereto, and optionally between the upright stop beam 14 and the upright reinforcement 6 adjacent thereto. In a preferred embodiment the number of tarpaulin connectors 26 is thus one whole number greater than the number of upright reinforcements 6. Each tarpaulin connector is also connected to tensioning strap 17 so that the tarpaulin connector 26 forms a connection between tensioning strap 17 and the tarpaulin. The connection is such that a limited movement of tensioning strap 17 relative to the tarpaulin is allowed. This can be realized in simple manner by giving the tarpaulin connector the form of a flexible element with a predetermined length, wherein the tarpaulin connector is connected on one side to the tarpaulin and on the other to the tensioning strap. Owing to its flexibility, the tensioning strap can move freely until the tensioning strap comes to life further from the tarpaulin than the length of the tarpaulin connector 26 allows.

The tarpaulin connector is shown partially bent on the right-hand side of figure 3, which indicates that tensioning strap 17 can still move relative to tarpaulin 3. This allows additional tensioning of tensioning strap 17 and thereby a slight movement thereof toward door 10, without this affecting tarpaulin 3.

When the tarpaulin is opened, the tarpaulin typically folds outward in a concertina form. This is illustrated on the left-hand side of figure 3. Between two adjacent upright reinforcements 6 the tarpaulin moves in a direction away from the loading space, wherein a central zone of the tarpaulin comes to lie furthest from the loading space. Tarpaulin connecter 26 is preferably connected to this central zone of the tarpaulin. Because the tarpaulin moves outward, the tarpaulin comes to lie at a distance from the tensioning strap which lies at the boundary of the range of motion of tarpaulin connector 26. The tarpaulin connector hereby pulls tensioning strap 17 along with it. In practice the tensioning strap is moved along into the same concertina shape by the tarpaulin connectors 26. The tensioning strap comes to lie in the folds of the tarpaulin and will therefore not be in the way of activities in the open loading space.

Figure 3 shows on the left-hand side that a hook is provided at an end of tensioning strap 17. The tensioning strap can be connected to the second upright stop beam 14 via this hook. Shown on the right-hand side is control mechanism 24 with a roll-up mechanism for the tensioning strap 17. Tensioning strap 17 can be controlled via a roll-up mechanism. Controlling of the tensioning strap 17 is understood to mean adjusting the overall length of tensioning strap 17, this being the length between control mechanism 24 and upright stop beam 14, such that tensioning strap 17 is tensioned with a predetermined force when door 10 is pressed against stop beam 13.

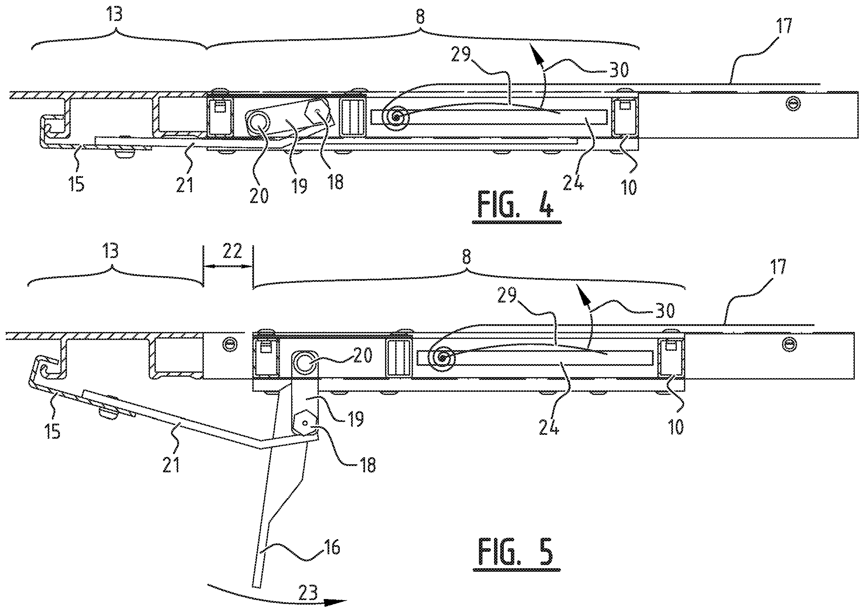

Figure 4 shows a section of the closing system in a closed position. Figure 5 shows a section of the same closing system in a semi-open position. The distance between door 10 and stop beam 13 is thus considerably smaller in figure 4 than the distance 22 between door 10 and stop beam 13 in figure 5. When a user of the suspension system wants to close the tarpaulin, the user will move door 10 toward stop beam 13. It will be apparent here that, as door 10 gets closer to its final position (position against the stop beam), the tensioning force on the tarpaulin will increase. It will therefore not be easy for a user to move door 10 all the way against stop beam 13. The user will however typically be easily able to move door 10 to a position in the vicinity of the stop beam. In the vicinity of the stop beam is here understood to mean in the vicinity of stop beam 13, or to a distance 22 smaller than 15 cm, preferably smaller than 10 cm. As shown in figure 5, the handle 16 can be pivoted open in this position, whereby the closing profile performs (in addition to a rotation movement) a translation movement toward stop beam 13. This translation movement, which is a result of the hinge 18 which is placed on a protrusion 19 of shaft 20, enables the distance 22 to be bridged, and enables closing profile 15 to engage in the groove of stop beam 13. This position is shown in figure 5. In a subsequent step a user can pivot the handle in direction 23, after which door 10 pulls itself closed against stop beam 13. In this way a user can close door 10 up against stop beam 13 in simple manner.

The closing profile 11 is preferably connected to hinges 18 via a mounting arm 21. The mounting arm is preferably formed, in the shown figures via a bend, such that in the closed position (as shown in figure 4) the hinge 18 lies behind the plane formed by the engagement between stop beam 13 and groove 12 on one side and shaft 20 on the other. A so-called over-centre lock is hereby obtained, wherein the tensioning force of the tarpaulin enhances the closing action. This is because in the configuration as shown in figure 4 this tensioning force of the tarpaulin will force protrusion 19 and shaft 20 in counter-clockwise direction (which is not possible because the rotation in this direction is prevented by door 10). A rotation of protrusions 19 and shaft 20 in clockwise direction is however necessary to open the lock (in order to reach the position as shown in figure 5). In the open position of the lock mechanism, as shown in figure 5, hinge 18 is situated in front of the plane formed by the engagement point of stop beam 13 and groove 12 on one side and shaft 20 on the other. During closing the hinge 18 is displaced through this plane and to a position behind the plane, and thus pushed "over its centre point". This prevents unwanted opening of the lock.

Figures 4 and 5 show a preferred embodiment of the invention, and it will be apparent to the skilled person that other embodiments can be envisaged. A closing profile 15 can thus be connected to a door 10 via a hinge which only allows movement of closing profile 15 in the direction transversely of the longitudinal direction. In such a configuration either no tightening mechanism is provided, or an alternative tightening mechanism can be provided wherein the length of mounting arms 21 can for instance be adjusted after engagement of stop beam 13 and groove 12.

In the embodiment of figures 4 and 5 handle 16 is connected to shaft 20. It will however be apparent that embodiments wherein a handle is connected directly to closing profile 11, preferably on an underside thereof so that it is easily accessible to a user, are likewise possible.

Figures 4 and 5 further show that control mechanism 24 is integrated in door 10 and is provided for rolling up tensioning strap 17, wherein the rolling up is controllable via a handle 29. The roll for tensioning strap 17 preferably has a ratchet mechanism whereby the roll can be wound up in one rotation direction and only rotates in the other direction when the mechanism is unlocked. By moving handle 29 reciprocally along arrow 30, tensioning strap 17 can be wound onto the roll.

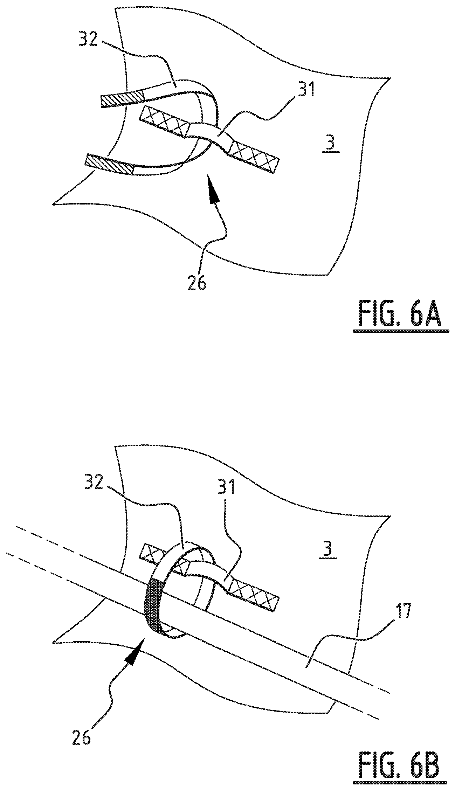

Figure 6 shows a preferred embodiment of a tarpaulin connector 26. Tarpaulin connector 26 preferably comprises an attaching element 31 on tarpaulin 3, and a spacer 32 which can connect attaching element 31 to tensioning strap 17. Attaching element 31 is preferably connected fixedly to the tarpaulin and is for instance formed as a strap piece which is connected on either side to the tarpaulin by means of stitching, welding, fusing, adhesion or other connecting techniques. A central zone of the strap piece is not connected so that a channel is formed between the tarpaulin and the strap piece at the position of the central zone.

Spacer 32 can take different forms. Figure 6 shows a simple embodiment wherein the spacer 32 takes the form of a strap piece which is provided on either side with complementary velcro tape, so that the strap piece can be formed into a closed loop. The closed loop is shown in figure 6B. In the mounted state the closed loop also encloses the tensioning strap 17, so that tensioning strap 17 is connected to tarpaulin 3 via the loop 32 and the attaching element 31. In the shown embodiment loop 32 is not connected directly to tensioning strap 17. In an alternative embodiment loop 32 is connected fixedly to tensioning strap 17 by stitching or adhesion or welding or via a bolt or rivet connection.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. System for attaching a tarpaulin (3) for the purpose of closing a side of a loading space, wherein the system comprises an upper support beam (5), a lower support beam (4) and a first and a second upright stop beam (13, 14), which system further comprises a plurality of upright reinforcements (6), each comprising an upper carriage (8) compatible with the upper support beam and a lower guide element (7) compatible with the lower support beam, such that the upright reinforcements (6) are connected via the carriages and guide elements to the support beams (4, 5) and are movable in the longitudinal direction relative to the support beams, which plurality of upright reinforcements (6) are provided for the purpose of connecting to the tarpaulin (3) so that the tarpaulin can be opened and closed by moving the upright supporting beams and so that the tarpaulin extends on an outer side of the upright reinforcements, wherein the system comprises a door element (10) which is provided for the purpose of attaching the tarpaulin thereto, which door element comprises on an upper side and on a lower side guide means which are complementary to respectively the upper and lower support beam (4, 5), and which door element is complementary to the first stop beam (13) so that the side wall is closable by pressing the door element against the first stop beam, wherein a tensioning strap (17) is connected between the door element (10) and the second stop beam (14) so that, when the door element is pressed against the first stop beam, the tensioning strap is tensioned on an inner side of the upright reinforcements (6) **characterized in that** the tensioning strap (17) is connected to the tarpaulin (3) at multiple positions, wherein each connection is realized via a tarpaulin connector (26) which is positioned substantially centrally between adjacent upright reinforcements (6), which tarpaulin connector is provided to bridge at least a distance between the outer side and the inner side of the upright reinforcements.

2. System according to claim 1, wherein the tensioning strap (17) is freely movable relative to each of the upright reinforcements (6) in at least one direction of movement, preferably at least two directions of movement, more preferably at least three directions of movement.

3. System according to claim 1 or 2, wherein the number of said plurality of positions is substantially equal to and preferably one whole number greater than the number of upright reinforcements (6).

4. System according to any one of the foregoing claims, wherein each tarpaulin connector (26) allows a predetermined limited movement in at least two directions of movement, preferably at least three directions of movement.

5. System according to any one of the foregoing claims, wherein the tarpaulin connector (26) is formed by a flexible element with a predetermined length.

6. System according to any one of the foregoing claims, wherein the tarpaulin connector (26) is releasable.

7. System according to any one of the foregoing claims, wherein the tensioning strap (17) is connected to the door element (10) via a control mechanism (24) in order to control the tensioning force of the tensioning strap in the closed position; and/or
wherein the tensioning strap is connected to an inner side of the door element; and/or
wherein the tensioning strap comprises a hook which is complementary to the second stop beam for the purpose of connecting the tensioning strap to the second stop beam via the hook.

8. System according to any one of the foregoing claims, wherein the system comprises a second door element (10) which is provided for the purpose of attaching the tarpaulin thereto, which second door element comprises on an upper side and on a lower side guide means which are complementary to respectively the upper and lower support beam (5, 4), and which second door element is complementary to the second stop beam (14) so that the side wall is closable by pressing the second door element against the second stop beam, wherein the tensioning strap can be connected at the position of the second stop beam to the second stop beam via the second door element.

9. System according to any one of the foregoing claims, wherein the door element (10) comprises a lock mechanism which is complimentary to the stop beam (13, 14) for the purpose of locking the door element in the closed position;
preferably wherein the stop beam has a groove and wherein the lock mechanism comprises a closing profile (15) which extends along at least one quarter of the height of the door element, which closing profile is connected rotatably to the door element at at least two positions, wherein the closing profile is further provided with a tongue which is provided to engage in the groove by rotation of the closing profile and so press the door element against the stop beam; and/or
preferably wherein the lock mechanism further comprises tightening means for tightening the door element against the stop beam.

10. System according to any one of the foregoing claims, wherein the lower guide element (7) comprises a lower carriage.

11. System according to any one of the foregoing claims, wherein the upright reinforcements (6) are formed by upright supporting beams.

12. System according to any one of the foregoing claims, wherein the upper support beam (5) is provided with an upper rail which extends in a longitudinal direction, wherein the upper carriages (8) of the upright reinforcements are provided so as to be guided in the longitudinal direction by the upper rail, and wherein the lower support beam (4) is provided with a lower rail which extends in the longitudinal direction, wherein the lower guide elements (7) of the upright reinforcements are provided so as to be guided in the longitudinal direction by the lower rail.

13. System according to any one of the foregoing claims, wherein the system further comprises folding plates (11, 12), each comprising a substantially central pivot zone and two peripheral pivot zones, wherein the folding plates mutually connect adjacent upright reinforcements in a manner such that the folding plates press the tarpaulin outward when the upright reinforcements are moved toward each other.

14. Trailer for a truck, at least one side wall of which is provided with a system according to any one of the foregoing claims.

15. Wagon for a train, at least one side wall of which is provided with a system according to any one of the claims 1-13.

## Patentansprüche

1. System zum Anbringen einer Plane (3) zum Zwecke eines Schließens einer Seite eines Laderaums, wobei das System einen oberen Stützbalken (5), einen unteren Stützbalken (4) und einen ersten und einen zweiten aufrechten Anschlagbalken (13, 14) umfasst, wobei das System ferner eine Vielzahl von aufrechten Verstärkungen (6) umfasst, jeweils umfassend einen mit dem oberen Stützbalken kompatiblen oberen Schlitten (8) und ein mit dem unteren Stützbalken kompatibles unteres Führungselement (7) derart, dass die aufrechten Verstärkungen (6) über die Schlitten und Führungselemente mit den Stützbalken (4, 5) verbunden sind und in der Längsrichtung relativ zu den Stützbalken bewegbar sind, wobei die Vielzahl von aufrechten Verstärkungen (6) zum Zwecke eines Verbindens mit der Plane (3) bereitgestellt sind, sodass die Plane durch Bewegen der aufrechten Stützbalken geöffnet und geschlossen werden kann und sodass sich die Plane auf einer Außenseite der aufrechten Verstärkungen erstreckt, wobei das System ein Türelement (10) umfasst, das zum Zwecke des Anbringens der Plane daran bereitgestellt ist, wobei das Türelement auf einer oberen Seite und auf einer unteren Seite Führungsmittel umfasst, die zu dem oberen beziehungsweise dem unteren Stützbalken (4, 5) komplementär sind, und wobei das Türelement komplementär zu dem ersten Anschlagbalken (13) ist, sodass die Seitenwand durch Drücken des Türelements gegen den ersten Anschlagbalken schließbar ist, wobei ein Spanngurt (17) zwischen dem Türelement (10) und dem zweiten Anschlagbalken (14) verbunden ist, sodass, wenn das Türelement gegen den ersten Anschlagbalken gedrückt wird, der Spanngurt auf einer Innenseite der aufrechten Verstärkungen (6) gespannt wird, **dadurch gekennzeichnet, dass** der Spanngurt (17) an mehreren Positionen mit der Plane (3) verbunden ist, wobei jede Verbindung über einen Planenverbinder (26) realisiert wird, der im Wesentlichen zentral zwischen angrenzenden aufrechten Verstärkungen (6) positioniert ist, wobei der Planenverbinder bereitgestellt ist, um mindestens einen Abstand zwischen der Außenseite und der Innenseite der aufrechten Verstärkungen zu überbrücken.

2. System nach Anspruch 1, wobei der Spanngurt (17) relativ zu jeder der aufrechten Verstärkungen (6) in mindestens einer Bewegungsrichtung, vorzugsweise mindestens zwei Bewegungsrichtungen, mehr bevorzugt mindestens drei Bewegungsrichtungen, frei bewegbar ist.

3. System nach Anspruch 1 oder 2, wobei die Anzahl der Vielzahl von Positionen im Wesentlichen gleich und vorzugsweise um eine ganze Zahl größer als die Anzahl von aufrechten Verstärkungen (6) ist.

4. System nach einem der vorstehenden Ansprüche, wobei jeder Planenverbinder (26) eine zuvor bestimmte begrenzte Bewegung in mindestens zwei Bewegungsrichtungen, vorzugsweise mindestens drei Bewegungsrichtungen, erlaubt.

5. System nach einem der vorstehenden Ansprüche, wobei der Planenverbinder (26) durch ein flexibles Element mit einer zuvor bestimmten Länge ausgebildet ist.

6. System nach einem der vorstehenden Ansprüche, wobei der Planenverbinder (26) lösbar ist.

7. System nach einem der vorstehenden Ansprüche, wobei der Spanngurt (17) über einen Steuermechanismus (24) mit dem Türelement (10) verbunden ist, um die Spannkraft des Spanngurts in der geschlossenen Position zu steuern; und/oder
wobei der Spanngurt mit einer Innenseite des Türelements verbunden ist; und/oder
wobei der Spanngurt einen Haken umfasst, der komplementär zu dem zweiten Anschlagbalken ist, zum Zwecke des Verbindens des Spanngurts mit dem zweiten Anschlagbalken über den Haken.

8. System nach einem der vorstehenden Ansprüche, wobei das System ein zweites Türelement (10) umfasst,
das zum Zwecke des Anbringens der Plane daran bereitgestellt ist, wobei das zweite Türelement auf einer oberen Seite und auf einer unteren Seite Führungsmittel umfasst, die komplementär zu dem oberen beziehungsweise dem unteren Stützbalken (5, 4) sind, und wobei das zweite Türelement komplementär zu dem zweiten Anschlagbalken (14) ist, sodass die Seitenwand durch Drücken des zweiten Türelements gegen den zweiten Anschlagbalken schließbar ist, wobei der Spanngurt an der Position des zweiten Anschlagbalkens über das zweite Türelement mit dem zweiten Anschlagbalken verbunden werden kann.

9. System nach einem der vorstehenden Ansprüche, wobei das Türelement (10) einen Verriegelungsmechanismus umfasst, der komplementär zu dem Anschlagbalken (13, 14) ist, zum Zwecke eines Verriegeln des Türelements in der geschlossenen Position;
wobei der Anschlagbalken vorzugsweise eine Nut aufweist und wobei der Verriegelungsmechanismus ein Schließprofil (15) umfasst, das sich entlang mindestens eines Viertels der Höhe des Türelements erstreckt, wobei das Schließprofil an mindestens zwei Positionen mit dem Türelement drehbar verbunden ist, wobei das Schließprofil ferner mit einer Feder versehen ist, die bereitgestellt ist, um durch Drehung des Schließprofils in die Nut einzugreifen und so das Türelement gegen den Anschlagbalken zu drücken; und/oder
wobei der Verriegelungsmechanismus vorzugsweise ferner ein Festziehmittel zum Festziehen des Türelements an dem Anschlagbalken umfasst.

10. System nach einem der vorstehenden Ansprüche, wobei das untere Führungselement (7) einen unteren Schlitten umfasst.

11. System nach einem der vorstehenden Ansprüche, wobei die aufrechten Verstärkungen (6) durch aufrechte Stützbalken ausgebildet werden.

12. System nach einem der vorstehenden Ansprüche, wobei der obere Stützbalken (5) mit einer oberen Schiene versehen ist, die sich in einer Längsrichtung erstreckt, wobei die oberen Schlitten (8) der aufrechten Verstärkungen bereitgestellt sind, um in der Längsrichtung durch die obere Schiene geführt zu werden, und wobei der untere Stützbalken (4) mit einer unteren Schiene versehen ist, die sich in der Längsrichtung erstreckt, wobei die unteren Führungselemente (7) der aufrechten Verstärkungen bereitgestellt sind, um in der Längsrichtung durch die untere Schiene geführt zu werden.

13. System nach einem der vorstehenden Ansprüche, wobei das System ferner Faltplatten (11, 12) umfasst, jeweils umfassend eine im Wesentlichen zentrale Schwenkzone und zwei periphere Schwenkzonen, wobei die Faltplatten angrenzende aufrechte Verstärkungen in einer derartigen Weise miteinander verbinden, dass die Faltplatten die Plane nach außen drücken, wenn die aufrechten Verstärkungen aufeinander zu bewegt werden.

14. Anhänger für einen Lkw, wobei mindestens eine Seitenwand davon mit einem System nach einem der vorstehenden Ansprüche versehen ist.

15. Güterwagen für einen Zug, wobei mindestens eine Seitenwand davon mit einem System nach einem der Ansprüche 1 bis 13 versehen ist.

## Revendications

1. Système permettant de fixer une bâche (3) dans le but de fermer un côté d'un espace de chargement, le système comprenant une poutrelle de support supérieure (5), une poutrelle de support inférieure (4) et une première et une seconde poutrelle de butée verticale (13, 14), lequel système comprend en outre une pluralité de renforts verticaux (6), chacun comprenant un chariot supérieur (8) compatible avec la poutrelle de support supérieure et un élément de guidage inférieur (7) compatible avec la poutrelle de support inférieure, de telle sorte que les renforts verticaux (6) sont reliés par le biais des chariots et des éléments de guidage aux poutrelles de support (4, 5) et sont mobiles dans la direction longitudinale par rapport aux poutrelles de support, laquelle pluralité de renforts verticaux (6) est prévue dans le but d'être reliée à la bâche (3) de telle sorte que la bâche peut être ouverte et fermée en déplaçant les poutrelles porteuses verticales et de telle sorte que la bâche s'étend sur un côté extérieur des renforts verticaux, le système comprenant un élément de porte (10) qui est prévu dans le but de fixer la bâche à cet élément, lequel élément de porte comprend sur un côté supérieur et sur un côté inférieur des moyens de guidage qui sont complémentaires respectivement aux poutrelles de support supérieure et inférieure (4, 5), et lequel élément de porte est complémentaire à la première poutrelle de butée (13) de telle sorte que la paroi latérale peut être fermée en pressant l'élément de porte contre la première poutrelle de butée, dans lequel une sangle de tension (17) est reliée entre l'élément de porte (10) et la seconde poutrelle de butée (14) de telle sorte que, lorsque l'élément de porte est pressé contre la première poutrelle de butée, la sangle de tension est tendue sur un côté intérieur des renforts verticaux (6) **caractérisé en ce que** la sangle de tension (17) est reliée à la bâche (3) en plusieurs positions, dans lequel chaque liaison est réalisée par le biais d'un connecteur de bâche (26) qui est positionné sensiblement centralement entre des renforts verticaux adjacents (6), lequel connecteur de bâche est prévu pour combler au moins une distance entre le côté extérieur et le côté intérieur des renforts verticaux.

2. Système selon la revendication 1, dans lequel la sangle de tension (17) est librement mobile par rapport à chacun des renforts verticaux (6) dans au moins une direction de mouvement, de préférence au moins deux directions de mouvement, plus préférablement au moins trois directions de mouvement.

3. Système selon la revendication 1 ou 2, dans lequel le nombre de ladite pluralité de positions est sensiblement égal à et de préférence supérieur d'un nombre entier au nombre de renforts verticaux (6).

4. Système selon l'une quelconque des revendications précédentes, dans lequel chaque connecteur de bâche (26) permet un mouvement limité prédéterminé dans au moins deux directions de mouvement, de préférence au moins trois directions de mouvement.

5. Système selon l'une quelconque des revendications précédentes, dans lequel le connecteur de bâche (26) est formé par un élément flexible d'une longueur prédéterminée.

6. Système selon l'une quelconque des revendications précédentes, dans lequel le connecteur de bâche (26) est libérable.

7. Système selon l'une quelconque des revendications précédentes, dans lequel la sangle de tension (17) est reliée à l'élément de porte (10) par le biais d'un mécanisme de commande (24) afin de commander la force de tension de la sangle de tension dans la position fermée ; et/ou
dans lequel la sangle de tension est reliée à un côté intérieur de l'élément de porte ; et/ou
dans lequel la sangle de tension comprend un crochet qui est complémentaire à la seconde poutrelle de butée dans le but de relier la sangle de tension à la seconde poutrelle de butée par le biais du crochet.

8. Système selon l'une quelconque des revendications précédentes, le système comprenant un second élément de porte (10)
qui est prévu dans le but de fixer la bâche à cet élément, lequel second élément de porte comprend sur un côté supérieur et sur un côté inférieur des moyens de guidage qui sont complémentaires respectivement des poutrelles de support supérieure et inférieure (5, 4), et lequel second élément de porte est complémentaire de la seconde poutrelle de butée (14) de telle sorte que la paroi latérale peut être fermée en pressant le second élément de porte contre la seconde poutrelle de butée, dans lequel la sangle de tension peut être reliée à la seconde poutrelle de butée à la position de la seconde poutrelle de butée par le biais du second élément de porte.

9. Système selon l'une quelconque des revendications précédentes, dans lequel l'élément de porte (10) comprend un mécanisme de verrouillage qui est complémentaire à la poutrelle de butée (13, 14) dans le but de verrouiller l'élément de porte dans la position fermée ;
de préférence dans lequel la poutrelle de butée présente une rainure et dans lequel le mécanisme de verrouillage comprend un profil de fermeture (15) qui s'étend sur au moins un quart de la hauteur de l'élément de porte, lequel profil de fermeture est relié de manière rotative à l'élément de porte en au moins deux positions, dans lequel le profil de fermeture est en outre pourvu d'une languette qui est prévue pour entrer en prise dans la rainure par rotation du profil de fermeture et ainsi presser l'élément de porte contre la poutrelle de butée ; et/ou
de préférence dans lequel le mécanisme de verrouillage comprend en outre des moyens de serrage permettant de serrer l'élément de porte contre la poutrelle de butée.

10. Système selon l'une quelconque des revendications précédentes, dans lequel l'élément de guidage inférieur (7) comprend un chariot inférieur.

11. Système selon l'une quelconque des revendications précédentes, dans lequel les renforts verticaux (6) sont formés par des poutrelles porteuses verticales.

12. Système selon l'une quelconque des revendications précédentes, dans lequel la poutrelle de support supérieure (5) est pourvue d'un rail supérieur qui s'étend dans une direction longitudinale, dans lequel les chariots supérieurs (8) des renforts verticaux sont prévus pour être guidés dans la direction longitudinale par le rail supérieur, et dans lequel la poutre de support inférieure (4) est pourvue d'un rail inférieur qui s'étend dans la direction longitudinale, dans lequel les éléments de guidage inférieurs (7) des renforts verticaux sont prévus pour être guidés dans la direction longitudinale par le rail inférieur.

13. Système selon l'une quelconque des revendications précédentes, le système comprenant en outre des plaques de pliage (11, 12), chacune comprenant une zone de pivotement sensiblement centrale et deux zones de pivotement périphériques, dans lequel les plaques de pliage relient mutuellement des renforts verticaux adjacents de manière à ce que les plaques de pliage pressent la bâche vers l'extérieur lorsque les renforts verticaux sont déplacés l'un vers l'autre.

14. Remorque destinée à un camion, dont au moins une paroi latérale est pourvue d'un système selon l'une quelconque des revendications précédentes.

15. Wagon destiné à un train, dont au moins une paroi latérale est pourvue d'un système selon l'une quelconque des revendications 1 à 13.
